# EUROPEAN PATENT SPECIFICATION

(11) **EP 2 764 948 B1**
(45) Date of publication and mention of the grant of the patent: **22.02.2017**
(21) Application number: 14158693.3
(22) Date of filing: 26.05.2011
(51) Int. Cl.: B23K 26/08, B23K 26/38, B23K 26/04, B65B 61/02, B23K 26/30, B23K 26/40

(54) **Apparatus for making perforations in a packaging material and method of adjusting such an apparatus**
Vorrichtung zur Herstellung von Perforationen in einem Verpackungsmaterial und Verfahren zum Einstellen der Vorrichtung
Appareil pour réaliser des perforations dans un matériau de conditionnement et procédé de réglage d'un tel appareil

(30) Priority: 01.06.2010 EP 10164641
(43) Date of publication of application: 13.08.2014
(62) Divisional of application: 11721531.9
(73) Proprietor: Perfo Knowledgy BV, 3230 AG Brielle (NL)
(72) Inventor: de Bruin, Martijn Willem, 3628 BC Kockengen (NL)
(74) Representative: De Vries & Metman

(56) References cited:
- EP-A1- 1 857 812
- WO-A1-2006/063609
- GB-A- 2 101 029
- US-A- 4 218 606
- US-B1- 7 083 837

## Description

The invention relates to an apparatus for making perforations in a packaging material, according to the preamble of claim 1 in particular a polymer film, comprising a conveyor for transporting the material along a path through the apparatus, e.g. from a supply reel to a take-up reel, a laser device, with adjustable focal point, and an in-line detector for measuring one or more parameters of the perforations made with the beam, in particular an optical detector such as a (digital) camera. The invention further relates to a method of adjusting such an apparatus.

As explained in US 7,083,837, which discloses an apparatus according to the preamble of claim 1 and a method of adjusting an apparatus for making perforations in a packaging material comprising the steps of making a plurality of perforations in the packaging material by means of the laser device,
transporting the perforated material with the perforations, measuring one parameter relating to the packaging material, the quality and shelf life of many food products is enhanced by enclosing them in packaging that modifies or controls the atmosphere surrounding the product. Increased quality and longer shelf life result in fresher products for the consumer, less waste from spoiled produce, better inventory control, and appreciable overall savings for the food industry at both the retail and wholesale levels. The goal in fresh fruit and vegetable packaging is to use modified and controlled atmosphere packaging (MAP/CAP) to preserve produce quality by reducing aerobic respiration rate yet avoiding anaerobic processes that lead to adverse changes in texture, flavor, and aroma, as well as an increased public health concern. US 7,083,837 discloses a microperforation system wherein a stationary laser beam drills the microperforations in a target area of a film, as the film is moving.

WO 02/12068 relates to a method for packaging products prone to decay, wherein a synthetic foil is conveyed through a (laser) punching device, where perforations are punched in the synthetic foil, the perforated synthetic foil is formed as packages having the desired dimensions and these packages are filled with the products and closed. The perforation surface is set by controlling the number and size of the perforations. With the method according to WO 02/12068 only a limited number of synthetic foils should be available in stock, since the perforations are only punched at the start of the packaging process.

EP 1 857 812 relates to a quality control system for monitoring a parameter of holes formed in a film, especially a flexible packaging film. The system comprises a digital camera to form successive images of the holes in the film while the film is fed past the camera. These images are captured and parameters of the holes are analysed in an analyser so as to determine whether or not the parameters meet predetermined quality standards, and a warning is triggered by the analyser if the quality standards are not met. The warning signal may also be used to control the perforator so as to on-line correct for quality variations in hole size and frequency.

WO 2006/063609 relates to a device for perforating a flexible film by means of a laser beam, comprising a laser beam generator, transport means for transporting the flexible film through the laser beam and focusing means for focussing the laser beam on the film surface. A detector is positioned along the path of movement of the flexible film for detecting whether the perforation has been made in the correct way.

WO2009/132663 relates to a process for making perforations in a plastic film material to be used in a package for products prone to decay, in which the surface area of the perforations made in a defined surface area of the plastic film material must have a predetermined value. The process involves making one or more perforations, measuring the surface area of the perforation(s), calculating the difference between the predetermined value and the actual surface area and adjusting the number of perforations based on this difference.

The above publications relate to quality control during production. Prior to production, the perforating beam must be focused on the surface of the film. In practice, this is done by making perforations in a first part of the film, removing the film from the apparatus, checking the perforations under a microscope, adjusting focus, and repeating these steps until adequate focus is reached. This procedure may take up e.g. 20% of the total time needed to produce a batch of perforated film.

It is an object of the present invention to improve adjusting focus prior to production, in particular to reduce the time involved and preferably also to obtain more accurate focus.

To this end, the apparatus according to claim 1 is provided.

In the apparatus according to the invention, a controller is provided, which is connected to the laser device and the detector and arranged to adjust, preferably prior to production, the focal point of the laser device based on the parameter(s) measured by the detector.

Thus, the in-line detector already present in most cases is employed to focus the laser device and the time required to adjust focus is significantly reduced.

In an embodiment, the controller is arranged to vary the focal point of the laser device in a plurality of increments, typically discrete and equidistant positions, and operate the laser device to make at least one perforation at each increment. In a further embodiment, the controller is arranged to calculate an average and/or standard deviation of the values of the parameter(s) measured at each increment and/or over a range of increments. In particular, the increment where the standard deviation of the parameter, such as the diameter, surface area and/or circumference of the perforations, is smallest was found to provide good results during subsequent production.

In a relatively straightforward embodiment, the detector and the laser device are coupled such that their focal points are on a line that extends parallel to the packaging material. I.e., when the packaging material is in focus of the detector it is also in focus of the laser device.

In a further embodiment, the apparatus comprises a controller connected to the laser device and the detector and arranged to adjust the power of the laser device based on the parameter or one or more of the parameters. This controller and parameter(s) may be the same controller and parameter(s) as those employed for adjusting focus, but may as well be a different controller and/or parameter dedicated to at least this function.

Adjusting power in this way facilitates finer adjusting during production as, for instance, disclosed in WO 2009/132663.

In an embodiment, the controller is arranged to vary the power of the laser device in a plurality of increments and operate the laser device to make at least one perforation at each increment.

The invention also relates to a method of adjusting an apparatus as described above comprising the steps of making a plurality of perforations in the material by means of the laser device, measuring one or more parameters of the perforations with the in-line detector, and adjusting, preferably prior to production, the focal point of the laser device based on the parameter.

In an embodiment, the method comprises varying the focal point of the laser device in a plurality of increments, typically positions relative to the packaging material, determining at which increment the packaging material is in focus of the beam, and adjusting the focal point of the laser device to that increment.

The invention will now be explained in more detail with reference to the Figures, in which
Fig. 1 shows an apparatus for making perforations in a packaging material;
Fig. 2 shows an alternative embodiment of an apparatus, comprising a guide;
Fig. 3 is a detail of the embodiment of Fig. 2.

In the following, like elements and aspects carry like reference symbols.

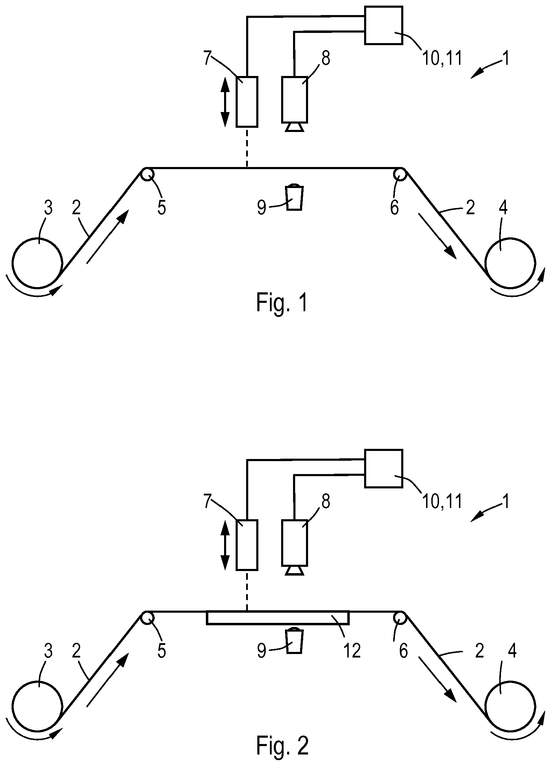

Fig. 1 shows a preferred apparatus 1 for making perforations in a packaging material, in particular a polymer film 2, comprising a supply reel 3, a take-up reel 4, and guides 5, 6 together defining a conveyor for transporting the film 2 along a path through the apparatus 1. Suitable polymer films are generally known and include films made of polyethylene, polypropylene, polyester, polyamide, and cellophane, in monolayers and laminates.

The apparatus 1 further comprises a laser device, in this example a laser device 7, with adjustable focal point, and an in-line detector, in this example a digital camera 8, for measuring one or more parameters of the perforations made with the laser. A light source 9 is positioned opposite the digital camera 8, i.e. on the other side of the film, to improve the signal to noise ratio of the information obtained with the camera. The laser device 7 and the digital camera 8 are connected to a controller 10. In this example, the laser device comprises a lens and the focal point of the laser device can adjusted by moving the lens up or down, e.g. by rotating it. In an alternative embodiment, the entire laser device can be moved up and down (as indicated by the double arrow).

When a new roll of packaging film has been positioned on the supply reel and fed through the apparatus along the conveyor path to the take-roll, a pre-production run is started, wherein by means of the controller the position of the focal point of the laser device is varied with respect to the packaging material in a plurality of increments, in this example twenty steps of 10 µm each, and the laser device is operated to make a plurality of perforations, e.g. five perforations at each increment. Within the framework of the present invention, the perforations typically have a diameter in a range from 25 to 250 µm, which are common sizes for packages containing average amounts, e.g. two to four portions, of produce, e.g. lettuce or broccoli.

A digital image is formed of each of the perforations and the surface area of each of the perforation is measured by counting the image pixels defining the perforation. Subsequently, the controller calculates the standard deviation of the surfaces of the perforations at each increment. If few, e.g. one or two, perforations are made at each increment or more information is needed for other reasons, the controller calculates the standard deviation of the surfaces of the perforations over a range of increments, e.g. by including at each increment the surfaces measured at the previous and the next increment. After that, the controller determines at which increment the standard deviation of the measured parameter is smallest and adjusts the focus of the laser device to the position relative to the film where the standard deviation is smallest. The laser beam is now properly focussed on the film.

In a next step, the intensity of the laser beam is adjusted. If the surface area of the holes is smaller or larger than a preselected value appropriate for the packaging material concerned, the power of the beam is increased or decreased respectively in one or more increments until the preselected size is obtained. When the preselected size is obtained, production commences. During production, the camera and the controller continuously monitor and adjust the power of the laser to obtain perforations of the preselected size.

This example illustrates how focussing of the beam and adjusting the power of the beam is carried out by means of the in-line digital camera. The time required to adjust focus is significantly reduced and uniformity of the perforations is increased.

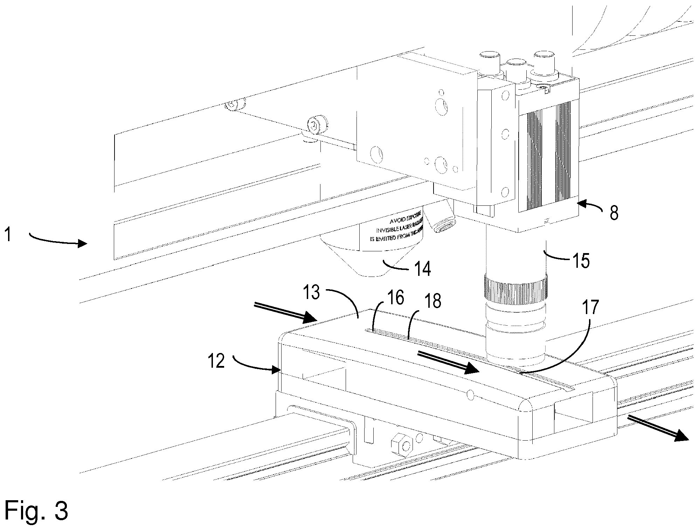

Figs. 2 and 3 show an apparatus 1 comprising an optional support 12 in the conveyor path (indicated with open arrows in Fig. 3) having a surface 13. Fig. 3 shows the support 12, a lens 14 of the laser device 7 and the camera 8 comprising a lens 15.

At least a portion of the film 2 is guided over and supported by the surface 13 of the support 12 at or near the position of the laser 7 and/or the camera 8, preferably in both positions as shown here. Thus, definition of the position of the film 2 with respect to the position of the laser focus and/or the camera focus is improved.

Preferably, the film 2 is taut over the support 12, for which (part of) the support 12 and/or one or more guides 5, 6 may be adjustable, e.g. in height and/or parallel to the film 2, e.g. for particular films and/or positions of (the holes in) the film 2.

The supporting surface 13 of the support 12 may have a predetermined curvature. The (supporting surface 13 of the) support 12 preferably comprises a smooth, hard and/or low friction surface, e.g. comprising polished metal, high-density polyethylene (HDPE) and/or polytetrafluorethene (PTFE, Teflon®) and may have rounded edges. This may prevent harming the film 2 (see Fig. 3).

Fig. 3 shows a recess or an opening 16 in the support receiving the beam of the laser 7, preventing interaction between (the surface 13 of) the support 12, the laser focus and/or (molten) material of the film 2, also providing eye safety for an operator of the apparatus 1.

A further opening 17 in (the surface of) the support 12 is arranged below the camera lens 15 with the light source 9 arranged below it, possibly within the support 12 (not shown), so as to provide optical access to the film 2 from both upper and lower sides. The light source 9 may be arranged remote from the camera 8 and an optical beam line may be provided, e.g. one or more mirrors, light guides and/or optical fibers to deliver the light to the desired position, e.g. to prevent interaction between the light source and the film, e.g. heat from a lamp which might affect the film 2. A light-emitting diode (LED) may provide strong illumination at little generated heat and in a small volume and may be arranged in the support 12.

The support 12 comprises a slot 18 in or through the support surface 13, which is arranged along at least part of the intended path of a perforation and which crosses the laser beam, overlapping its position, and which preferably has dimensions wider than that of the diameter of the perforations to be made. This prevents deforming and/or closing perforations by smearing still-molten material from the edges of freshly-made perforations improving quality and repeatability. It also assists providing and maintaining a clean support surface 13 and film 2.

As an alternative, not shown, instead of a single support 12 two support portions adjacent each other may be provided, which may be separated from each other for forming a slot between them for receiving the laser beam, providing optical access to the film 2 from opposite sides and/or preventing deforming and/or closing perforations. The support portions may be adjustable individually or together.

## Claims

1. Apparatus (1) for making perforations in a packaging material, in particular a polymer film (2), comprising a conveyor for transporting the material (2) along a path through the apparatus (1), a laser device (7) with adjustable focal point, an in-line optical detector (8) being a camera (8) comprising a lens (15), for measuring one or more parameters of the perforations made with the beam, and a support (12) for guiding and supporting the packaging material (2) at or near the position of the laser (7) and the detector (8), **characterized in that** the laser device (7) and the optical detector (8) are positioned on one side of the packaging material (2), the support (12) being positioned on an opposite side of the packaging material (2), **in that** the detector (8) and the laser device (7) are coupled such that their focal points are on a line that extends parallel to the packaging material (2), wherein the parameter(s) is or include(s) the diameter, surface area and/or circumference of the perforation(s), and **in that** the support (12) comprises a recess or an opening (16, 17) in the support receiving the beam of the laser (7).

2. Apparatus (1) according to claim 1, wherein the support (12) comprises a slot (18) in or through the support surface (13), which is arranged along at least part of the intended path of a perforation through the apparatus and crossing the beam.

3. Apparatus (1) according to any one of the preceding claims, wherein the support (12) comprises two support portions adjacent each other, which may be separated from each other for forming a slot between them for receiving the laser beam.

4. Apparatus (1) according to any one of the preceding claims, possibly comprising guides (5, 6), wherein part of the support (12) and/or if present one or more guides (5, 6), are adjustable in height and/or parallel to the packaging material (2) for arranging the packaging material (2) taut over the support (12).

5. Apparatus (1) according to any one of the preceding claims, wherein the support (12) comprises a supporting surface (13) having a predetermined curvature and/or has a smooth, hard and/or low friction surface and/or rounded edges preventing harming the packaging material (2).

6. Apparatus (1) according to any one of the preceding claims, wherein the support (12) comprises an opening (17) arranged below the optical detector providing optical access to the packaging material (2) from both upper and lower sides, wherein in particular the apparatus comprises a light source (9), e.g. a light-emitting diode (LED), and the light source (9) may be arranged below the opening (17), possibly within the support (12).

7. Apparatus (1) according to any one of the preceding claims, comprising a controller (10) connected to the laser device (7) and the detector (8) and arranged to adjust the focal point of the laser device (7) based on the parameter or one or more of the parameters, wherein in particular the parameter or one or more of the parameters is or includes the diameter, surface area and/or circumference of the perforations.

8. Apparatus (1) according to any one of the preceding claims, wherein the controller (10) is arranged to vary the focal point of the laser device (7) in a plurality of increments and operate the laser device (7) to make at least one perforation at each increment, and wherein in particular the controller (10) is arranged to calculate an average and/or standard deviation of the values of the parameter(s) measured at each increment and/or over a range of increments.

9. Apparatus (1) according to any one of the preceding claims, wherein the support (12) comprises a recess or an opening (16, 17) in the support providing optical access to the packaging material (2) from opposite sides.

10. Apparatus (1) according to any one of the preceding claims, comprising a controller (11) connected to the laser device (7) and the detector (8) and arranged to adjust the power of the laser device (7) based on the parameter or one or more of the parameters.

11. Apparatus (1) according claim 10, wherein the controller (11) is arranged to vary the power of the laser device (7) in a plurality of increments and operate the laser device (7) to make at least one perforation at each increment, and wherein in particular the controller is arranged to adjust the power of the laser device (7) prior to and also during production.

12. Method of adjusting an apparatus (1) according to any one of the preceding claims comprising the steps of
making a plurality of perforations in the packaging material (2) by means of the laser device (7),
transporting the perforated material (2) with the perforations along and over the slot through the apparatus,
measuring one or more parameters of the perforations with the in-line detector (8), wherein the parameter(s) is or include(s) the diameter, surface area and/or circumference of the perforation(s), and
adjusting the focal point of the laser device (7) based on the parameter(s).

13. Method according to claim 12, comprising varying the focal point of the laser device (7) in a plurality of increments
determining at which increment the packaging material (2) is in focus of the laser device (7), and
adjusting the focal point of the laser device (7) to that increment.

14. Method according to claim 12 or 13, comprising calculating an average and/or the standard deviation of the values of the parameter(s) measured.

15. Method according to any one of the claims 12-14, comprising, preferably after adjusting the focal point of the laser device (7), adjusting the power of the laser device (7) based on the parameter or one or more of the parameters, possibly comprising varying the power of the laser device (7) in a plurality of increments and determining at which increment the perforations have a preselected size.

## Patentansprüche

1. Vorrichtung (1) zur Herstellung von Perforationen in einem Verpackungsmaterial, insbesondere in einer dünnen Polymerschicht (2), die einen Förderer zum Transportieren des Materials (2) entlang eines Wegs durch die Vorrichtung (1), eine Laservorrichtung (7) mit einstellbarem Brennpunkt, einen optischen Inline-Detektor (8), der eine Kamera (8) ist, welche eine Linse (15) aufweist, zum Messen eines oder mehrerer Parameter der mit dem Strahl hergestellten Perforationen, und eine Halterung (12) zum Führen und Halten des Verpackungsmaterials (2) an oder nahe der Position des Lasers (7) und des Detektors (8) aufweist,
**dadurch gekennzeichnet, dass** die Laservorrichtung (7) und der optische Detektor (8) auf einer Seite des Verpackungsmaterials (2) positioniert sind, wobei die Halterung auf einer entgegengesetzten Seite des Verpackungsmaterials (2) positioniert ist, dass der Detektor (8) und die Laservorrichtung (7) derart gekoppelt sind, dass ihre Brennpunkte auf einer Linie sind, die sich parallel zu dem Verpackungsmaterial (2) erstreckt, wobei der/die Parameter der Durchmesser, die Oberfläche und/oder der Umfang der Perforation(en) ist/sind oder diesen/diese umfasst/umfassen, und dass die Halterung (12) eine Aussparung oder eine Öffnung (16, 17) in der Halterung aufweist, die den Strahl des Lasers (7) aufnimmt.

2. Vorrichtung (1) nach Anspruch 1, wobei die Halterung (12) einen Schlitz (18) in oder durch die Halterungsoberfläche (13) aufweist, der entlang wenigstens eines Teils des geplanten Wegs einer Perforation durch die Vorrichtung angeordnet ist und den Strahl kreuzt.

3. Vorrichtung (1) nach einem der vorhergehenden Ansprüche, wobei die Halterung (12) zwei zueinander benachbarte Halteabschnitte, die voneinander getrennt sein können, aufweist, um einen Schlitz zum Aufnehmen des Laserstrahls zwischen ihnen zu bilden.

4. Vorrichtung (1) nach einem der vorhergehenden Ansprüche, die möglicherweise Führungen (5, 6) aufweist, wobei ein Teil der Halterung (12) und/oder eine oder mehrere Führungen, sofern vorhanden, in der Höhe und/oder parallel zu dem Verpackungsmaterial (2) einstellbar sind, um das Verpackungsmaterial (2) über die Halterung (12) gespannt anzuordnen.

5. Vorrichtung (1) nach einem der vorhergehenden Ansprüche, wobei die Halterung (12) eine Halteoberfläche (13) aufweist, die eine vorgegebene Krümmung hat und/oder eine glatte, harte und/oder reibungsarme Oberfläche und/oder abgerundete Ränder hat, die eine Beschädigung des Verpackungsmaterials (2) verhindern.

6. Vorrichtung (1) nach einem der vorhergehenden Ansprüche, wobei die Halterung (12) eine Öffnung (17) aufweist, die unterhalb des optischen Detektors angeordnet ist, die sowohl von oberen als auch unteren Seiten den Zugang zu dem Verpackungsmaterial (2) bereitstellt, wobei die Vorrichtung insbesondere eine Lichtquelle (9), z.B. eine Leuchtdiode (LED) aufweist, und die Lichtquelle (9) unterhalb der Öffnung (17), möglicherweise innerhalb der Halterung (12) angeordnet sein kann.

7. Vorrichtung (1) nach einem der vorhergehenden Ansprüche, die aufweist: eine Steuerung (10), die mit der Laservorrichtung (7) und dem Detektor (8) verbunden ist und eingerichtet ist, um den Brennpunkt der Laservorrichtung (7) basierend auf dem Parameter oder einem oder mehreren der Parameter einzustellen, wobei der Parameter oder einer oder mehrere der Parameter insbesondere der Durchmesser, die Oberfläche und/oder der Umfang der Perforationen ist/sind oder diesen/diese umfasst/umfassen.

8. Vorrichtung (1) nach einem der vorhergehenden Ansprüche, wobei die Steuerung (10) eingerichtet ist, um den Brennpunkt der Laservorrichtung (7) in mehreren Inkrementen zu ändern und die Laservorrichtung (7) derart zu betreiben, dass in jedem Inkrement wenigstens eine Perforation hergestellt wird, und wobei die Steuerung (10) insbesondere eingerichtet ist, um eine mittlere und/oder Standardabweichung der Werte des/der Parameter, die in jedem Inkrement und/oder über einen Bereich von Inkrementen gemessen werden, zu berechnen.

9. Vorrichtung (1) nach einem der vorhergehenden Ansprüche, wobei die Halterung (12) eine Aussparung oder eine Öffnung (16, 17) in der Halterung aufweist, die von entgegengesetzten Seiten den optischen Zugang zu dem Verpackungsmaterial (2) bereitstellt.

10. Vorrichtung (1) nach einem der vorhergehenden Ansprüche, die eine Steuerung (11) aufweist, die mit der Laservorrichtung (7) und dem Detektor (8) verbunden ist und eingerichtet ist, um die Leistung der Laservorrichtung (7) basierend auf dem Parameter oder einem oder mehreren der Parameter einzustellen.

11. Vorrichtung (1) nach Anspruch 10, wobei die Steuerung (11) eingerichtet ist, um die Leistung der Laservorrichtung (7) in mehreren Inkrementen zu ändern und die Laservorrichtung (7) derart zu betreiben, dass in jedem Inkrement wenigstens eine Perforation hergestellt wird, und wobei die Steuerung insbesondere eingerichtet ist, um die Leistung der Laservorrichtung (7) vor und auch während der Herstelllung einzustellen.

12. Verfahren zum Einstellen einer Vorrichtung (1) nach einem der vorhergehenden Ansprüche, das die folgenden Schritte aufweist:
Herstellen mehrerer Perforationen in dem Verpackungsmaterial (2) mit Hilfe der Laservorrichtung (7),
Transportieren des perforierten Materials (2) mit den Perforationen entlang und über den Schlitz durch die Vorrichtung,
Messen eines oder mehrerer Parameter der Perforationen mit dem Inline-Detektor (8), wobei der/die Parameter der Durchmesser, die Oberfläche und/oder der Umfang der Perforationen ist/sind oder diesen/diese umfasst/umfassen, und
Einstellen des Brennpunkts der Laservorrichtung (7) basierend auf dem/den Parameter/Parametern.

13. Verfahren nach Anspruch 12, das aufweist:
Ändern des Brennpunkts der Laservorrichtung (7) in mehreren Inkrementen, Bestimmen, in welchem Inkrement das Verpackungsmaterial (2) im Brennpunkt der Laservorrichtung (7) ist, und
Einstellen des Brennpunkts der Laservorrichtung (7) auf dieses Inkrement.

14. Verfahren nach Anspruch 12 oder 13, das das Berechnen einer mittleren und/oder Standardabweichung der Werte des/der gemessenen Parameter aufweist.

15. Verfahren nach einem der Ansprüche 12-14, das, vorzugsweise nach dem Einstellen des Brennpunkts der Laservorrichtung (7), das Einstellen der Leistung der Laservorrichtung (7) basierend auf dem Parameter oder einem oder mehreren der Parameter, aufweist, was möglicherweise das Ändern der Leistung der Laservorrichtung (7) in mehreren Inkrementen und das Bestimmen, in welchem Inkrement die Perforationen eine vorausgewählte Größe haben, aufweist.

## Revendications

1. Appareil (1) pour réaliser des perforations dans un matériau de conditionnement, en particulier un film polymère (2), comprenant un convoyeur pour transporter le matériau (2) le long d'un chemin à travers l'appareil (1), un dispositif laser (7) avec un point focal ajustable, un détecteur optique en ligne (8) consistant en une caméra (8) comprenant une lentille (15) pour la mesure d'un ou plusieurs paramètres des perforations effectuées avec le faisceau, et un support (12) pour le guidage et le portage du matériau de conditionnement (2) sur ou à proximité de la position du laser (7) et du détecteur (8), **caractérisé en ce que** le dispositif laser (7) et le détecteur optique (8) sont positionnés sur un côté du matériau de conditionnement (2) le support (12) étant positionné sur un côté opposé du matériau de conditionnement (2), **en ce que** le détecteur (8) et le dispositif laser (7) sont couplés de sorte que leurs points focaux sont sur une ligne qui s'étend en parallèle du matériau de conditionnement (2), dans lequel le(s) paramètre(s) est/sont ou inclue(nt) le diamètre, la surface et/ou la circonférence de la/des perforation(s), et **en ce que** le support (12) comprend un renfoncement ou une ouverture (16, 17) dans le support recevant le faisceau du laser (7).

2. Appareil (1) selon la revendication 1, dans lequel le support (12) comprend une fente (18) dans ou à travers la surface de support (13), qui est disposée le long, au moins partiellement, du chemin prévu d'une perforation à travers l'appareil et croisant le faisceau.

3. Appareil (1) selon l'une quelconque des revendications précédentes, dans lequel le support (12) comprend deux sections de support contiguës, qui peuvent être séparées l'une de l'autre pour former une fente entre celles-ci afin de réceptionner le faisceau laser.

4. Appareil (1) selon l'une quelconque des revendications précédentes, comprenant possiblement des guides (5, 6), dans lequel une partie du support (12) et/ou un ou plusieurs guides (5, 6), si ceux-ci sont présents, sont ajustables en hauteur et/ou parallèlement au matériau de conditionnement (2) afin de disposer le matériau de conditionnement (2) tendu par-dessus le support (12).

5. Appareil (1) selon l'une quelconque des revendications précédentes, dans lequel le support (12) comprend une surface de support (13) possédant une courbure prédéterminée et/ou possède une surface de friction lisse, dure et/ou faible et/ou des bords arrondis afin de prévenir les dommages au matériau de conditionnement (2).

6. Appareil (1) selon l'une quelconque des revendications précédentes, dans lequel le support (12) comprend une ouverture (17) disposée en-dessous du détecteur optique offrant un accès optique au matériau de conditionnement (2) à partir des deux côtés supérieur et inférieur, dans lequel en particulier l'appareil comprend une source lumineuse (9), par exemple une diode électroluminescente (LED), et la source lumineuse (9) peut être disposée en-dessous de l'ouverture (17), possiblement à l'intérieur du support (12).

7. Appareil (1) selon l'une quelconque des revendications précédentes, comprenant un appareil de contrôle (10) connecté au dispositif laser (7) et au détecteur (8) et disposé pour ajuster le point focal du dispositif laser (7) en fonction du paramètre ou d'un ou de plusieurs des paramètres, dans lequel en particulier le paramètre ou un ou plusieurs paramètre(s) est/sont ou inclut(ent) le diamètre, la surface et/ou la circonférence des perforations.

8. Appareil (1) selon l'une quelconque des revendications précédentes, dans lequel l'appareil de contrôle (10) est disposé pour faire varier le point focal du dispositif laser (7) dans une pluralité d'incréments et faire fonctionner le dispositif laser (7) afin d'effectuer au moins une perforation à chaque incrément, et dans lequel en particulier l'appareil de contrôle (10) est conçu pour calculer une moyenne et/ou un écart-type des valeurs du/des paramètre(s) mesurés à chaque incrément et/ou sur une plage d'incréments.

9. Appareil (1) selon l'une quelconque des revendications précédentes, dans lequel le support (12) comprend un renfoncement ou une ouverture (16, 17) dans le support, offrant un accès optique au matériau de conditionnement (2) à partir des côtés opposés.

10. Appareil (1) selon l'une quelconque des revendications précédentes, comprenant un appareil de contrôle (11) connecté au dispositif laser (7) et au détecteur (8) et conçu pour ajuster la puissance du dispositif laser (7) en fonction du paramètre ou un ou plusieurs des paramètres.

11. Appareil (1) selon la revendication 10, dans lequel l'appareil de contrôle (11) est conçu pour faire varier la puissance du dispositif laser (7) dans une pluralité d'incréments et faire fonctionner le dispositif laser (7) afin d'effectuer au moins une perforation à chaque incrément, et dans lequel en particulier l'appareil de contrôle est conçu pour ajuster la puissance du dispositif laser (7) avant ainsi qu'au cours de la production.

12. Procédé d'ajustement d'un appareil (1) selon l'une quelconque des revendications précédentes comprenant les étapes de
réalisation d'une pluralité de perforations dans le matériau de conditionnement (2) à l'aide du dispositif laser (7),
transport du matériau de conditionnement (2) perforé avec les perforations le long et par-dessus la fente à travers l'appareil,
mesure d'un ou de plusieurs paramètres des perforations avec le détecteur en ligne (8), dans lequel le(s) paramètre(s) est/sont ou inclut(ent) le diamètre, la surface et/ou la circonférence de la/des perforation(s), et
ajustement du point focal du dispositif laser (7) en fonction du/des paramètre(s).

13. Procédé selon la revendication 12, comprenant la variation du point focal du dispositif laser (7) dans une pluralité d'incréments
la détermination de l'incrément avec lequel le matériau de conditionnement (2) est à la mise au point du dispositif laser (7), et
l'ajustement du point focal du dispositif laser (7) à cet incrément.

14. Procédé selon la revendication 12 ou 13, comprenant le calcul d'une moyenne et/ou de l'écart-type des valeurs du/des paramètre(s) mesuré(s).

15. Procédé selon l'une quelconque des revendications 12 à 14, comprenant, préférablement après l'ajustement du point focal du dispositif laser (7), l'ajustement de la puissance du dispositif laser (7) en fonction du paramètre ou d'un ou de plusieurs paramètres, comprenant possiblement la variation de la puissance du dispositif laser (7) en une pluralité d'incréments et la détermination de l'incrément avec lequel les perforations ont une taille présélectionnée.
